# EUROPÄISCHE PATENTSCHRIFT

(11) **EP 3 222 843 B1**
(45) Veröffentlichungstag und Bekanntmachung des Hinweises auf die Patenterteilung: **12.01.2022**
(21) Anmeldenummer: 17171307.6
(22) Anmeldetag: 13.02.2013
(51) Int. Cl.: F02M 37/10, B60K 15/03, F02M 37/00

(54) **TANKANLAGE MIT EINER SAUGSTRAHLPUMPE**
TANK SYSTEM WITH A SUCTION JET PUMP
INSTALLATION DE RÉSERVOIR ÉQUIPÉE D'UNE POMPE À JET ASPIRANT

(30) Priorität: 13.07.2012 DE 102012013913
(43) Veröffentlichungstag der Anmeldung: 27.09.2017
(62) Teilanmeldung aus: 13000728.9
(73) Patentinhaber: MAN Truck & Bus SE, 80995 München (DE)
(72) Erfinder: Albertshofer, Günter, 81929 München (DE); Marx, Stefan, 82290 Landsberied (DE); Zimmer, Michael, 85399 Hallbergmoos (DE)
(74) Vertreter: v. Bezold & Partner Patentanwälte - PartG mbB

(56) Entgegenhaltungen:
- WO-A1-2010/064972
- WO-A1-2010/068149
- DE-C1- 4 400 958
- GB-A- 2 284 581

## Beschreibung

Die Erfindung betrifft eine Tankanlage für ein Kraftfahrzeug mit einem Verbrennungsmotor, insbesondere für ein Nutzfahrzeug (z.B. Lastkraftwagen, Omnibus) mit einem Dieselmotor.

Herkömmliche Tankanlagen für Lastkraftwagen weisen oftmals einen Haupttank und einen Zusatztank auf, wobei eine motorische Kraftstoffpumpe den Dieselkraftstoff aus dem Haupttank entnimmt und zu dem Dieselmotor des Lastkraftwagens fördert. Der Zusatztank ist hierbei durch eine Verbindungsleitung mit dem Haupttank verbunden, wobei diese Verbindungsleitung unterhalb des Rahmens des Lastkraftwagens verläuft und deshalb stets kraftstoffgefüllt ist. Dadurch stellt die Verbindungsleitung sicher, dass die Füllstände in dem Haupttank und in dem Zusatztank stets angeglichen werden. Dieses bekannte Konzept benötigt zwar zur Entnahme des Dieselkraftstoffs aus dem Zusatztank keine separate Kraftstoffpumpe, jedoch ist die Führung der Verbindungsleitung unterhalb des Rahmens des Lastkraftwagens mit Nachteilen verbunden.

Weiterhin ist es beispielsweise aus DE 10 2010 061 813 A1 grundsätzlich bekannt, als Kraftstoffpumpe eine sogenannte Saugstrahlpumpe einzusetzen, um den Kraftstoff aus dem Kraftstofftank zu fördern. Hierbei weist der Kraftstofftank in der Regel zusätzlich einen sogenannten Tankgeber auf, der den Füllstand in dem Kraftstofftank misst. Die Saugstrahlpumpe bildet also neben dem Tankgeber ein zusätzliches Bauteil, was relativ aufwändig ist.

Zum technischen Hintergrund der Erfindung ist auch hinzuweisen auf DE 44 00 958 C1, WO 2010/064972 A1 und GB 2 284 581 A1.

Schließlich offenbart WO 2010/068149 A1 eine Tankanlage gemäß dem Oberbegriff von Anspruch 1. Allerdings ist hierbei der Anschluss der Saugstrahlpumpe unbefriedigend.

Der Erfindung liegt deshalb die Aufgabe zugrunde, eine entsprechend verbesserte Tankanlage mit einer Saugstrahlpumpe zur Kraftstoffentnahme zu schaffen.

Diese Aufgabe wird durch eine erfindungsgemäße Tankanlage gemäß dem Hauptanspruch gelöst.

Zum einen umfasst die Erfindung die technische Lehre, die zur Kraftstoffentnahme aus dem Kraftstofftank dienende Saugstrahlpumpe in den ohnehin vorhandenen Tankgeber zu integrieren, wodurch ein multifunktionales Bauteil geschaffen wird, das sowohl zur Kraftstoffentnahme als auch zur Messung des Füllstands dient.

Zum anderen umfasst die Erfindung aber auch die technische Lehre, die an sich bekannte Saugstrahlpumpe nicht oder zumindest nicht nur zur Kraftstoffentnahme aus dem Haupttank der Tankanlage einzusetzen, sondern auch bei dem Zusatztank eine Saugstrahlpumpe einzusetzen, um den Kraftstoff aus dem Zusatztank zu entnehmen und zu dem Haupttank zu fördern. Dies bietet den Vorteil, dass die Verbindungsleitung zwischen dem Zusatztank und dem Haupttank nicht unterhalb des Rahmens des Lastkraftwagens oder des Omnibus geführt werden muss, um eine stets kraftstoffgefüllte Verbindungsleitung zu gewährleisten. Vielmehr ermöglicht die aktive Befüllung der Verbindungsleitung zwischen dem Zusatztank und dem Haupttank durch die Saugstrahlpumpe eine Verlegung des Verbindungstanks ohne prinzipbedingte Beschränkungen, also auch beispielsweise oberhalb eines Querträgers des Rahmens des Nutzfahrzeugs.

In einem bevorzugten Ausführungsbeispiel weist die Tankanlage eine Vorlaufleitung auf, die zwischen dem Haupttank und dem Verbrennungsmotor (z.B. Dieselmotor) verläuft, um den Verbrennungsmotor mit dem Kraftstoff (z.B. Dieselkraftstoff) aus dem Haupttank zu versorgen. Darüber hinaus weist die Tankanlage vorzugsweise eine Rücklaufleitung auf, die von dem Verbrennungsmotor ausgeht und zur Rückführung von nicht verbrauchtem Kraftstoff dient. Weiterhin verfügt die Tankanlage vorzugsweise über eine Verbindungsleitung zwischen dem Zusatztank und dem Haupttank, um den Kraftstoff aus dem Zusatztank in den Haupttank zu leiten. Die Saugstrahlpumpe weist hierbei einen Pumpeneinlass auf, um den Kraftstoff aus dem Zusatztank anzusaugen, weshalb der Pumpeneinlass der Saugstrahlpumpe mit dem Zusatztank verbunden ist, insbesondere über eine Steigleitung in dem Zusatztank. Ferner weist die Saugstrahlpumpe einen Pumpenauslass auf, um den geförderten Kraftstoff auszugeben, wobei der Pumpenauslass der Saugstrahlpumpe in die Verbindungsleitung zu dem Haupttank mündet. Schließlich weist die Saugstrahlpumpe auch einen Treibmitteleinlass auf, um ein Treibmittel zuzuführen, damit die Saugstrahlpumpe einen entsprechenden Ansaugdruck erzeugen kann, wobei die von dem Verbrennungsmotor kommende Rückführleitung in den Treibmitteleinlass mündet. Bei der erfindungsgemäßen Tankanlage wird die Saugstrahlpumpe also vorzugsweise von dem zurückgeführten Kraftstoff angetrieben.

Der erfindungsgemäße Einsatz der Saugstrahlpumpe zur Kraftstoffentnahme aus dem Zusatztank ermöglicht vorteilhaft - wie bereits vorstehend kurz erwähnt wurde - einen nahezu beliebigen Verlauf der Verbindungsleitung zwischen dem Zusatztank und dem Haupttank. Vorzugsweise verläuft die Verbindungsleitung hierbei oberhalb des Kraftstofftanks und/oder oberhalb des Zusatztanks. Bei einem Kraftfahrzeug (z.B. Lastkraftwagen) mit einem tragenden Rahmen (z.B. Leiterrahmen) mit mindestens einem Querträger kann die Verbindungsleitung zwischen dem Zusatztank und dem Haupttank vorteilhaft über oder unter dem Querträger verlaufen.

Es wurde bereits vorstehend erwähnt, dass die Erfindung die technische Lehre umfasst, die Saugstrahlpumpe in den Tankgeber zu integrieren, wodurch ein multifunktionales Bauteil geschaffen wird, das sowohl eine Kraftstoffentnahme als auch eine Füllstandsmessung ermöglicht. Im Rahmen der Erfindung kann zusätzlich noch eine Steigleitung in den Tankgeber integriert werden, wobei die Steigleitung im montierten Zustand von oben nach unten in den Kraftstofftank hineinragt, um den Kraftstoff aus dem Kraftstofftank zu entnehmen. Der im Rahmen der Erfindung verwendete Begriff einer baulichen Integration bedeutet vorzugsweise, dass die Steigleitung oder das sonstige weitere Bauteil fest mit dem Tankgeber verbunden ist und ein einheitliches Modul bildet. Darüber hinaus besteht im Rahmen der Erfindung auch die Möglichkeit, dass zusätzlich ein Füllstandssensor in den Tankgeber integriert ist, der den Füllstand des Kraftstoffs in dem Kraftstoffbehälter misst. Weiterhin kann auch die Auswertungselektronik für den Füllstandssensor in den Tankgeber integriert werden, wobei die Auswertungselektronik eingangsseitig mit dem Füllstandssensor verbunden ist und ausgangsseitig ein Ausgangssignal ausgibt, das den Füllstand des Kraftstoffs in dem Kraftstoffbehälter wiedergibt. Schließlich besteht auch die Möglichkeit, dass ein Lüftungsventil zur Entlüftung oder Belüftung des Kraftstoffbehälters in den Tankgeber integriert wird.

Bei dem vorstehend beschriebenen Tankgeber mit einer integrierten Saugstrahlpumpe sind der Pumpeneinlass, der Pumpenauslass und der Treibmitteleinlass an dem Tankgeber jeweils als Steckanschlüsse ausgebildet, um einen einfachen Anschluss der jeweiligen Leitungen zu ermöglichen.

Ferner ist zu erwähnen, dass die Steigleitung, die Steckanschlüsse und die Saugstrahlpumpe vorzugsweise aus Kunststoff bestehen, was eine einfache und kostengünstige Fertigung ermöglicht.

Darüber hinaus ist noch zu erwähnen, dass die Kraftstoffförderung aus dem Zusatztank vorzugsweise ausschließlich durch die Saugstrahlpumpe ohne eine zusätzliche motorgetriebene Kraftstoffpumpe erfolgt.

Die vorstehend beschriebene erfindungsgemäße Integration der Saugstrahlpumpe in den Tankgeber erfordert typischerweise eine besondere konstruktive Anpassung der Saugstrahlpumpe. Die erfindungsgemäße Saugstrahlpumpe ist deshalb so ausgebildet, dass der Treibmitteleinlass und der Pumpenauslass in einer gemeinsamen Anschlussebene nebeneinander angeordnet sind und mit ihren freien Enden in die selbe Richtung weisen. Der Pumpeneinlass ist dagegen rechtwinklig zu der vorstehend erwähnten Anschlussebene des Treibmitteleinlasses und des Pumpenauslasses ausgerichtet, um einen einfachen Anschluss an die Steigleitung zu ermöglichen. Darüber hinaus ist zu erwähnen, dass die Saugstrahlpumpe einen Düsenabschnitt aufweist, um den erforderlichen Ansaugdruck zu erzeugen, wobei der Pumpeneinlass über einen rechtwinkligen Krümmer und einen anschließenden U-förmigen Krümmer mit dem Düsenabschnitt verbunden ist. Der Treibmitteleinlass ist dagegen bei der erfindungsgemäßen Saugstrahlpumpe vorzugsweise über einen rechtwinkligen Krümmer mit dem Düsenabschnitt verbunden.

Ferner ist zu erwähnen, dass die Erfindung nicht nur Schutz beansprucht für die vorstehend beschriebene erfindungsgemäße Tankanlage. Vielmehr beansprucht die Erfindung auch Schutz für ein Kraftfahrzeug mit einer derartigen erfindungsgemäß ausgebildeten Tankanlage. Bei diesem Kraftfahrzeug handelt es sich vorzugsweise um ein Nutzfahrzeug, wie beispielsweise einen Lastkraftwagen (LKW) oder einen Omnibus.

Schließlich beansprucht die Erfindung auch Schutz für die neuartige Verwendung einer Saugstrahlpumpe zur Förderung von Kraftstoff aus einem Zusatztank in einen Haupttank einer Tankanlage eines Kraftfahrzeugs.

Andere vorteilhafte Weiterbildungen der Erfindung sind in den Unteransprüchen gekennzeichnet oder werden nachstehend zusammen mit der Beschreibung der bevorzugten Ausführungsbeispiele der Erfindung anhand der Figuren näher erläutert. Es zeigen:
- Figur 1: eine Perspektivansicht eines erfindungsgemäßen Kraftstofftanks mit einem Tankgeber mit einer integrierten Saugstrahlpumpe,
- Figur 2: eine Querschnittsansicht durch den Kraftstofftank gemäß Figur 1,
- Figur 3: eine Perspektivansicht des Tankgebers aus den Figuren 1 und 2,
- Figur 4: eine Perspektivansicht der Saugstrahlpumpe in dem Tankgeber gemäß Figur 3,
- Figur 5: eine Querschnittsansicht durch die Saugstrahlpumpe gemäß Figur 4,
- Figur 6: eine Prinzipdarstellung einer erfindungsgemäßen Tankanlage mit einem Haupttank und einem Zusatztank, wobei der Kraftstoff mittels einer Saugstrahlpumpe aus dem Zusatztank zu dem Haupttank gefördert wird, sowie
- Figur 7: eine Abwandlung des Ausführungsbeispiels gemäß Figur 6.

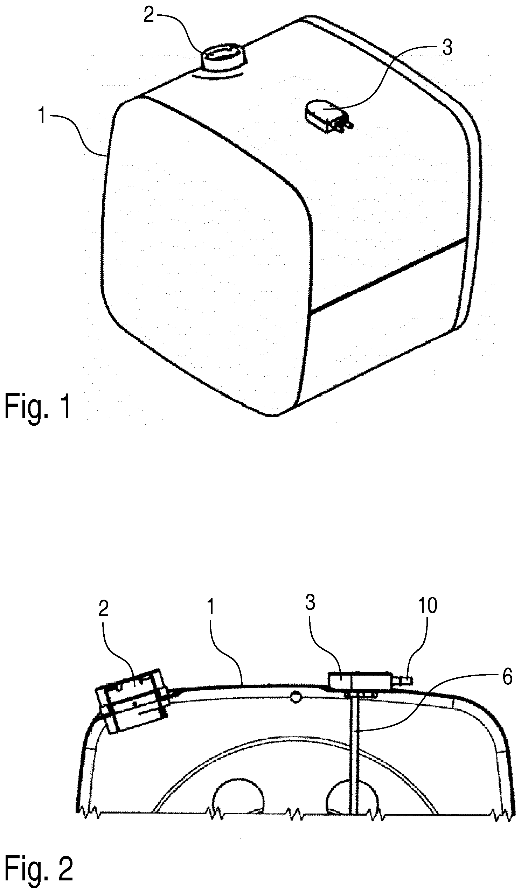

Die Figuren 1 und 2 zeigen einen Kraftstofftank 1 zur Aufnahme von Kraftstoff, wobei der Kraftstofftank 1 als Haupttank oder als Zusatztank in einem Nutzfahrzeug, z.B. Lastkraftwagen, Omnibus) eingesetzt werden kann.

An seiner Oberseite weist der Kraftstofftank 1 einen verschließbaren Einfüllstutzen 2 auf, über den der Kraftstofftank 1 mit dem jeweiligen Kraftstoff (z.B. Dieselkraftstoff) befüllt werden kann.

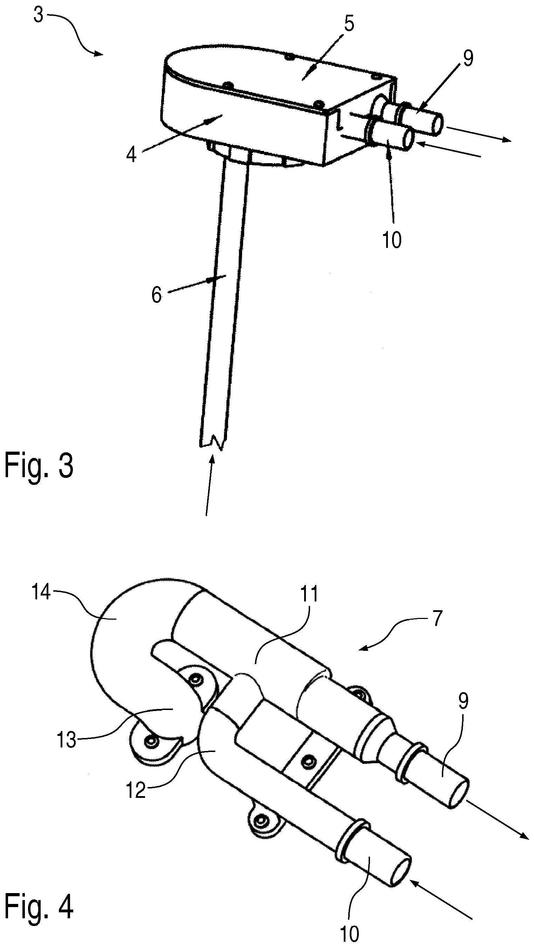

Darüber hinaus weist der Kraftstofftank 1 an seiner Oberseite eine Entnahmeeinheit 3 auf, die in Figur 3 in einer Perspektivansicht dargestellt ist und verschiedene Funktionen hat.

Zum einen kann die Entnahmeeinheit 3 eine Füllstandsmessung in dem Kraftstofftank 1 mittels eines Füllstandssensors ermöglichen, der in den Figuren 1 bis 5 zur Vereinfachung nicht dargestellt ist. Die Entnahmeeinheit 3 weist hierzu ein Gehäuse auf, das aus einem Gehäuseunterteil 4 und einem Gehäusedeckel 5 besteht, wobei der Gehäusedeckel 5 auf das Gehäuseunterteil 4 aufgesetzt und mit dem Gehäuseunterteil 4 verschraubt ist. In diesem Gehäuse befindet sich eine Auswerteelektronik, um das Ausgangssignal des Füllstandssensors auszuwerten und ein entsprechendes elektrisches Ausgangssignal zu erzeugen, das von der Bordelektronik des Nutzfahrzeugs ausgewertet werden kann.

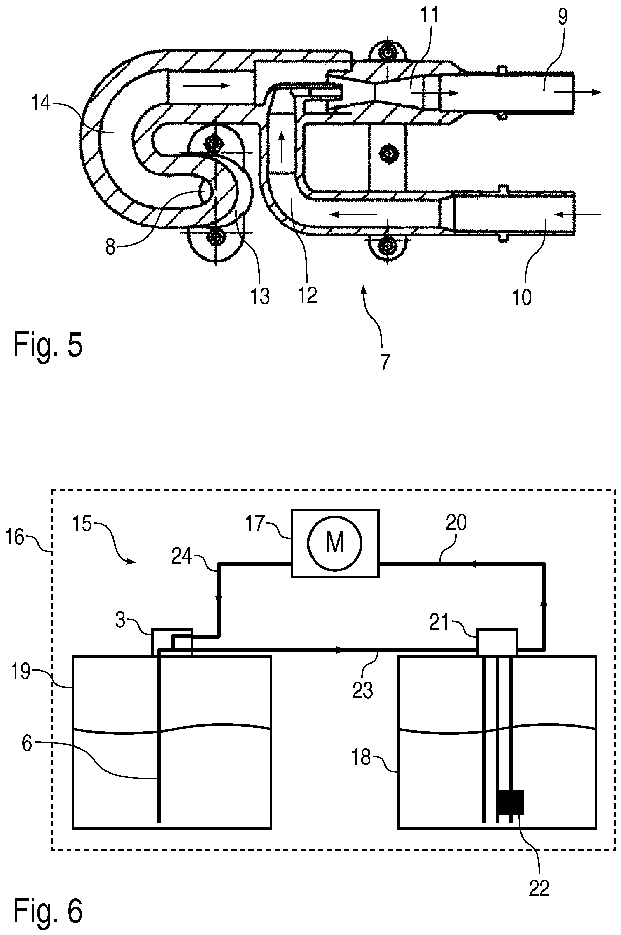

Zum anderen ermöglicht die multifunktionale Entnahmeeinheit 3 auch die Kraftstoffentnahme aus dem Kraftstofftank. Hierzu weist die Entnahmeeinheit 3 an ihrer Unterseite eine Steigleitung 6 auf, die von oben nach unten in den Kraftstofftank 1 hineinragt und dadurch eine Kraftstoffentnahme aus dem Kraftstofftank 1 ermöglicht. In dem Gehäuse der Entnahmeeinheit 3 befindet sich weiterhin eine Saugstrahlpumpe 7, die mit ihrem Pumpeneinlass 8 (vgl. Fig. 5) an die Steigleitung 6 angeschlossen ist und dadurch in der Steigleitung 6 einen entsprechenden Ansaugdruck erzeugen kann. Darüber hinaus weist die Saugstrahlpumpe 7 einen Pumpenauslass 9 auf, über den der angesaugte Treibstoff abgegeben werden kann, beispielsweise zu einem Haupttank oder direkt zu dem Verbrennungsmotor des jeweiligen Fahrzeugs. Darüber hinaus weist die Saugstrahlpumpe 7 noch einen Treibmitteleinlass 10 auf, über den ein Treibmittel (z.B. Kraftstoff von einer Kraftstoffrückleitung) zugeführt wird, damit die Saugstrahlpumpe 7 den erforderlichen Ansaugdruck erzeugen kann.

Der Pumpenauslass 9 und der Treibmitteleinlass 10 sind hierbei in einer gemeinsamen Anschlussebene nebeneinander angeordnet und mit ihren freien Enden in der selben Richtung ausgerichtet.

Der eigentliche Ansaugdruck wird in der Saugstrahlpumpe 7 in einem Düsenabschnitt 11 erzeugt, wobei der Treibmitteleinlass 10 über einen rechtwinkligen Krümmer 12 mit dem Düsenabschnitt 11 verbunden ist. Der Pumpeneinlass 8 ist dagegen über einen rechtwinkligen Krümmer 13 und einen anschließenden U-förmigen Krümmer 14 mit dem Düsenabschnitt 11 verbunden. Diese konstruktive Gestaltung der Saugstrahlpumpe 7 ermöglicht vorteilhaft eine Integration der Saugstrahlpumpe 7 in das Gehäuse des Tankgebers 3.

Figur 6 zeigt ein weiteres Ausführungsbeispiel einer erfindungsgemäßen Tankanlage 15, die in einem Nutzfahrzeug 16 (z.B. Lastkraftwagen, Omnibus) eingesetzt werden kann, um einen Dieselmotor 17 mit Dieselkraftstoff zu versorgen.

Hierzu weist die Tankanlage 15 einen Haupttank 18 und einen Zusatztank 19 auf, wobei der Haupttank 18 über eine Vorlaufleitung 20 mit dem Dieselmotor 17 verbunden ist, so dass der Dieselmotor 17 aus dem Haupttank 18 mit Dieselkraftstoff versorgt wird.

Die Kraftstoffentnahme aus dem Haupttank 18 erfolgt hierbei mittels eines Tankgebers 21 und einer Kraftstoffpumpe an dem Dieselmotor 17.

Der Zusatztank 19 ist über eine Verbindungsleitung 23 mit dem Haupttank 18 verbunden, wobei die Verbindungsleitung 23 in dem Nutzfahrzeug 16 beliebig geführt werden kann, ohne dass konstruktive Beschränkungen bestehen. Vorzugsweise wird die Verbindungsleitung 23 deshalb oberhalb oder unterhalb eines Querträgers des Rahmens des Nutzfahrzeugs 16 geführt.

Die Kraftstoffentnahme aus dem Zusatztank 19 erfolgt durch die vorstehend detailliert beschriebene Entnahmeeinheit 3, die über eine Rücklaufleitung 24 mit dem Dieselmotor 17 verbunden ist. Der von dem Dieselmotor 17 nicht verbrauchte Dieselkraftstoff wird also über die Rücklaufleitung 24 zu der Entnahmeeinheit 3 geführt und tritt dort über den Treibmitteleinlass 10 in die Saugstrahlpumpe 7 ein, wodurch die Saugstrahlpumpe 7 einen entsprechenden Ansaugdruck erzeugt.

Vorteilhaft an dieser Tankanlage 15 ist die Möglichkeit, die Verbindungsleitung 23 zwischen dem Zusatztank 19 und dem Haupttank 18 beliebig und ohne konstruktive Beschränkungen zu führen.

Abweichend von der vorstehenden Beschreibung enthält die Entnahmeeinheit 3 an dem Zusatztank 19 hierbei also die Saugstrahlpumpe 7, ermöglicht aber keine Füllstandsmessung. Der Tankgeber 21 an dem Haupttank 18 enthält dagegen in diesem Ausführungsbeispiel keine Saugstrahlpumpe, ermöglicht aber eine Füllstandsmessung mit dem Füllstandssensor.

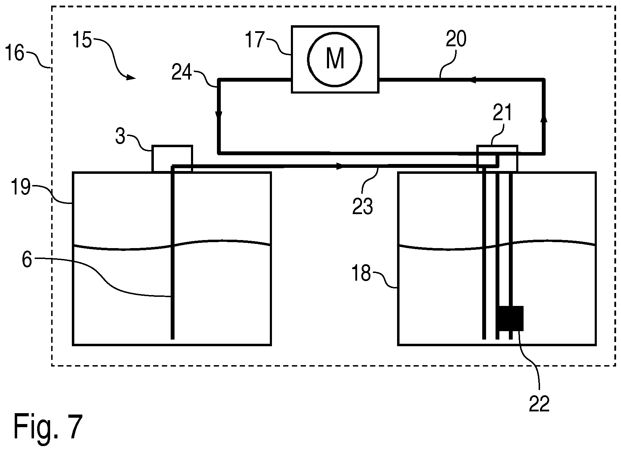

Figur 7 zeigt eine Abwandlung des Ausführungsbeispiels gemäß Figur 6, so dass zur Vermeidung von Wiederholungen auf die vorstehende Beschreibung verwiesen wird, wobei für entsprechende Einzelheiten dieselben Bezugszeichen verwendet werden.

Eine Besonderheit dieses Ausführungsbeispiels besteht darin, dass der Tankgeber 21 auch die Saugstrahlpumpe 7 enthält, wobei der Treibmitteleinlass 10 der Saugstrahlpumpe 7 von der Rückführleitung 24 gespeist wird. Die Saugstrahlpumpe 7 in der Entnahmeeinheit 21 saugt den Kraftstoff durch die Verbindungsleitung 23 aus dem Zusatztank 19 an.

Die Entnahmeeinheit 3 an dem Zusatztank 19 enthält dagegen in diesem Ausführungsbeispiel weder die Saugstrahlpumpe 7 noch den Füllstandssensor 22.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Ansprüchen. Hierbei ist auch zu erwähnen, dass die Erfindung auch Schutz beansprucht für einen entsprechenden Tankgeber bzw. eine Entnahmeeinheit mit einer integrierten Saugstrahlpumpe als einzelnes Bauteil, d.h. unabhängig von den sonstigen Bauteilen und Merkmalen der Tankanlage.

### Bezugszeichenliste

- 1: Kraftstofftank
- 2: Einfüllstutzen
- 3: Entnahmeeinheit
- 4: Gehäuseunterteil
- 5: Gehäusedeckel
- 6: Steigleitung
- 7: Saugstrahlpumpe
- 8: Pumpeneinlass
- 9: Pumpenauslass
- 10: Treibmitteleinlass
- 11: Düsenabschnitt
- 12: Rechtwinkliger Krümmer
- 13: Rechtwinkliger Krümmer
- 14: U-förmiger Krümmer
- 15: Tankanlage
- 16: Nutzfahrzeug
- 17: Dieselmotor
- 18: Haupttank
- 19: Zusatztank
- 20: Vorlaufleitung
- 21: Tankgeber
- 22: Füllstandssensor
- 23: Verbindungsleitung
- 24: Rücklaufleitung

## Patentansprüche

1. Tankanlage (15) für ein Kraftfahrzeug (16) mit einem Verbrennungsmotor (17), insbesondere für ein Nutzfahrzeug mit einem Dieselmotor (17), mit
a) einem Kraftstofftank (19) zur Aufnahme eines Kraftstoffs, insbesondere eines Dieselkraftstoffs, zum Betrieb des Verbrennungsmotors (17) und
b) einer Saugstrahlpumpe (7) zur Förderung des Kraftstoffs aus dem Kraftstofftank (19), mit
b1) einem Pumpeneinlass (8) zum Ansaugen des Kraftstoffs aus dem Kraftstofftank (19),
b2) einem Pumpenauslass (9) zur Abgabe des geförderten Kraftstoffs, und
b3) einem Treibmitteleinlass (10) zur Zuführung eines Treibmittels,
c) wobei der Kraftstofftank (19) ein Zusatztank (19) ist und die Saugstrahlpumpe (7) den Kraftstoff aus dem Zusatztank (19) in einen Haupttank (18) fördert, aus dem der Verbrennungsmotor (17) mit dem Kraftstoff versorgt wird,
**dadurch gekennzeichnet,**
d) dass der Pumpeneinlass (8), der Pumpenauslass (9) und der Treibmitteleinlass (10) jeweils als Steckanschlüsse ausgebildet sind,
e) dass der Treibmitteleinlass (10) und der Pumpenauslass (9) in einer gemeinsamen Anschlussebene nebeneinander angeordnet sind und mit ihren freien Enden in dieselbe Richtung weisen, und
f) dass der Pumpeneinlass (8) rechtwinklig zu der Anschlussebene des Treibmitteleinlasses (10) und des Pumpenauslasses (9) ausgerichtet ist.

2. Tankanlage nach Anspruch 1, **dadurch gekennzeichnet, dass** die Tankanlage (15) einen Tankgeber (21) aufweist, der den Füllstand des Kraftstoffs in dem Kraftstofftank (19) misst, wobei die Saugstrahlpumpe (7) baulich in den Tankgeber (21) integriert ist.

3. Tankanlage (15) nach Anspruch 1 oder 2, **dadurch gekennzeichnet,**
a) **dass** die Tankanlage (15) eine Vorlaufleitung (20) aufweist zur Versorgung des Verbrennungsmotors (17) mit dem Kraftstoff aus dem Haupttank (18),
b) **dass** die Tankanlage (15) eine Rücklaufleitung (24) aufweist zur Rückführung von nicht verbrauchtem Kraftstoff von dem Verbrennungsmotor (17),
c) **dass** die Tankanlage (15) eine Verbindungsleitung (23) aufweist, die den Zusatztank (19) mit dem Haupttank (18) verbindet, um den Kraftstoff aus dem Zusatztank (19) in den Haupttank (18) zu leiten,
d) **dass** der Pumpeneinlass (8) der Saugstrahlpumpe (7) mit dem Zusatztank (19) verbunden ist, insbesondere mit einer Steigleitung (6) in dem Zusatztank (19),
e) **dass** der Pumpenauslass (9) der Saugstrahlpumpe in die Verbindungsleitung (23) zu dem Haupttank (18) mündet, und
f) **dass** die von dem Verbrennungsmotor (17) kommende Rückführleitung in den Treibmitteleinlass (10) der Saugstrahlpumpe (7) mündet.

4. Tankanlage (15) nach Anspruch 3, **dadurch gekennzeichnet, dass** die Verbindungsleitung (23) von dem Zusatztank (19) zu dem Haupttank (18) oberhalb des Kraftstofftanks (18, 19) und oberhalb des Zusatztanks (19) verläuft.

5. Tankanlage (15) nach Anspruch 3 oder 4, **dadurch gekennzeichnet, dass** das Kraftfahrzeug (16) einen tragenden Rahmen mit mindestens einem Querträger aufweist, insbesondere einen Leiterrahmen, wobei die Verbindungsleitung (23) von dem Zusatztank (19) zu dem Haupttank (18) oberhalb oder unterhalb von einem der Querträger verläuft.

6. Tankanlage (15) nach einem der vorhergehenden Ansprüche, **dadurch gekennzeichnet, dass** zusätzlich mindestens eine der folgenden Komponenten baulich in den Tankgeber (21) integriert ist:
a) eine Steigleitung (6), die im montierten Zustand von oben nach unten in den Kraftstofftank (19) hinein ragt, um den Kraftstoff aus dem Kraftstofftank (19) zu entnehmen,
b) ein Füllstandssensor (22), der den Füllstand des Kraftstoffs in dem Kraftstofftank (19) misst,
c) eine Auswertungselektronik, die eingangsseitig mit dem Füllstandssensor verbunden ist und ausgangsseitig ein Ausgangssignal ausgibt, das den Füllstand des Kraftstoffs in dem Kraftstofftank (19) wiedergibt,
d) ein Lüftungsventil zur Entlüftung oder Belüftung des Kraftstofftanks (19).

7. Tankanlage (15) nach Anspruch 6, **dadurch gekennzeichnet, dass** die Steigleitung (6), die Steckanschlüsse und die Saugstrahlpumpe (7) aus Kunststoff bestehen.

8. Tankanlage (15) nach einem der vorhergehenden Ansprüche, **dadurch gekennzeichnet, dass** die Kraftstoffförderung aus dem Zusatztank (19) ausschließlich durch die Saugstrahlpumpe (7) ohne eine zusätzliche motorgetriebene Kraftstoffpumpe erfolgt.

9. Tankanlage (15) nach einem der vorhergehenden Ansprüche, **dadurch gekennzeichnet, dass** die Saugstrahlpumpe (7) einen Düsenabschnitt (11) aufweist, wobei der Pumpeneinlass (8) über einen rechtwinkligen Krümmer (13) und einen anschließenden U-förmigen Krümmer (14) mit dem Düsenabschnitt (11) verbunden ist.

10. Tankanlage (15) nach einem der vorhergehenden Ansprüche, **dadurch gekennzeichnet, dass** der Treibmitteleinlass (10) über einen rechtwinkligen Krümmer (12) mit dem Düsenabschnitt (11) verbunden ist.

11. Kraftfahrzeug (16), insbesondere Nutzfahrzeug, insbesondere Lastkraftwagen oder Omnibus, mit einer Tankanlage (15) nach einem der vorhergehenden Ansprüche.

## Claims

1. A tank system (15) for a motor vehicle (16) with an internal combustion engine (17), in particular for a utility vehicle with a diesel engine (17), with
a) a fuel tank (19) for receiving a fuel, in particular a diesel fuel, for the operation of the internal combustion engine (17), and
b) a suction jet pump (7) for conveying the fuel from the fuel tank (19), with
b1) a pump inlet (8) for the intake of the fuel from the fuel tank (19),
b2) a pump outlet (9) for the discharge of the conveyed fuel, and
b3) a propellant inlet (10) for feeding in a propellant,
c) the fuel tank (19) being an additional tank (19), and the suction jet pump (7) conveying the fuel from the additional tank (19) into a main tank (18), from which the internal combustion engine (17) is supplied with the fuel,
**characterized**
d) in that the pump inlet (8), the pump outlet (9) and the propellant inlet (10) are configured in each case as plug-in connectors,
e) in that the propellant inlet (10) and the pump outlet (9) are arranged next to one another in a common connector plane, and point with their free ends in the same direction, and
f) in that the pump inlet (8) is oriented at a right angle with respect to the connector plane of the propellant inlet (10) and the pump outlet (9).

2. The tank system according to Claim 1, **characterized in that** the tank system (15) has a tank sensor (21) which measures the filling level of the fuel in the fuel tank (19), the suction jet pump (7) being integrated structurally into the tank sensor (21).

3. The tank system according to Claim 1 or 2, **characterized**
a) **in that** the tank system (15) has a forward feed line (20) for the supply of the internal combustion engine (17) with the fuel from the main tank (18),
b) **in that** the tank system (15) has a return line (24) for the return of non-consumed fuel from the internal combustion engine (17),
c) **in that** the tank system (15) has a connecting line (23) which connects the additional tank (19) to the main tank (18), in order to conduct the fuel from the additional tank (19) into the main tank (18),
d) **in that** the pump inlet (8) of the suction jet pump (7) is connected to the additional tank (19), in particular to a riser (6) in the additional tank (19),
e) **in that** the pump outlet (9) of the suction jet pump opens into the connecting line (23) to the main tank (18), and
f) **in that** the return line which comes from the internal combustion engine (17) opens into the propellant inlet (10) of the suction jet pump (7).

4. The tank system (15) according to Claim 3, **characterized in that** the connecting line (23) runs from the additional tank (19) to the main tank (18) above the fuel tank (18, 19) and above the additional tank (19).

5. The tank system (15) according to Claim 3 or 4, **characterized in that** the motor vehicle (16) has a supporting frame with at least one crossmember, in particular a ladder-type frame, the connecting line (23) running from the additional tank (19) to the main tank (18) above or below one of the crossmembers.

6. The tank system (15) according to one of the preceding claims, **characterized in that,** in addition, at least one of the following components is integrated structurally into the tank sensor (21):
a) a riser (6) which, in the mounted state, protrudes from top to bottom into the fuel tank (19), in order to remove the fuel from the fuel tank (19),
b) a filling level sensor (22) which measures the filling level of the fuel in the fuel tank (19),
c) an evaluation electronics system which is connected on the input side to the filling level sensor and, on the output side, outputs an output signal which describes the filling level of the fuel in the fuel tank (19),
d) a ventilation valve for ventilating or aerating the fuel tank (19).

7. The tank system (15) according to Claim 6, **characterized in that** the riser (6), the plug-in connectors and the suction jet pump (7) consist of plastic.

8. The tank system (15) according to one of the preceding claims, **characterized in that** the fuel conveying from the additional tank (19) takes place exclusively by way of the suction jet pump (7) without an additional motor-driven fuel pump.

9. The tank system (15) according to one of the preceding claims, **characterized in that** the suction jet pump (7) has a nozzle section (11), the pump inlet (8) being connected via a right-angled elbow (13) and an adjoining U-shaped chamber (14) to the nozzle section (11) .

10. The tank system (15) according to one of the preceding claims, **characterized in that** the propellant inlet (10) is connected via a right-angled elbow (12) to the nozzle section (11).

11. A motor vehicle (16), in particular a utility vehicle, in particular a lorry or an omnibus, with a tank system (15) according to one of the preceding claims.

## Revendications

1. Installation de réservoir (15) pour un véhicule automobile (16) doté d'un moteur à combustion interne (17), en particulier pour un véhicule utilitaire doté d'un moteur diesel (17), comprenant
a) un réservoir de carburant (19) pour recevoir un carburant, en particulier un carburant diesel, pour faire fonctionner le moteur à combustion interne (17), et
b) une pompe à jet aspirant (7) pour refouler le carburant hors du réservoir de carburant (19), comprenant
b1) une entrée de pompe (8) pour aspirer le carburant hors du réservoir de carburant (19),
b2) une sortie de pompe (9) pour débiter le carburant refoulé, et
b3) une entrée de fluide moteur (10) pour acheminer un fluide moteur,
c) le réservoir de carburant (19) étant un réservoir auxiliaire (19) et la pompe à jet aspirant (7) refoulant le carburant hors du réservoir auxiliaire (19) dans un réservoir principal (18) à partir duquel le moteur à combustion interne (17) est alimenté en carburant,
caractérisée
d) en ce que l'entrée de pompe (8), la sortie de pompe (9) et l'entrée de fluide moteur (10) sont réalisées respectivement sous forme de raccords enfichables,
e) en ce que l'entrée de fluide moteur (10) et la sortie de pompe (9) sont disposées côte à côte dans un plan de raccordement commun et sont orientées dans la même direction par leurs extrémités libres, et
f) en ce que l'entrée de pompe (8) est aménagée perpendiculairement au plan de raccordement de l'entrée de fluide moteur (10) et de la sortie de pompe (9).

2. Installation de réservoir selon la revendication 1, **caractérisée en ce que** l'installation de réservoir (15) présente un détecteur de carburant (21) qui mesure le niveau du carburant dans le réservoir de carburant (19), la pompe à jet aspirant (7) étant intégrée structurellement dans le détecteur de carburant (21).

3. Installation de réservoir (15) selon la revendication 1 ou 2, **caractérisée**
a) **en ce que** l'installation de réservoir (15) présente une conduite d'aller (20) pour alimenter le moteur à combustion interne (17) en carburant provenant du réservoir principal (18),
b) **en ce que** l'installation de réservoir (15) présente une conduite de retour (24) pour ramener le carburant non consommé provenant du moteur à combustion interne (17),
c) **en ce que** l'installation de réservoir (15) présente une conduite de liaison (23) qui relie le réservoir auxiliaire (19) au réservoir principal (18) pour conduire le carburant du réservoir auxiliaire (19) dans le réservoir principal (18),
d) **en ce que** l'entrée de pompe (8) de la pompe à jet aspirant (7) est reliée au réservoir auxiliaire (19), en particulier à une conduite montante (6) dans le réservoir auxiliaire (19),
e) **en ce que** la sortie de pompe (9) de la pompe à jet aspirant débouche dans la conduite de liaison (23) avec le réservoir principal (18), et
f) **en ce que** la conduite de retour venant du moteur à combustion interne (17) débouche dans l'entrée de fluide moteur (10) de la pompe à jet aspirant (7).

4. Installation de réservoir (15) selon la revendication 3, **caractérisée en ce que** la conduite de liaison (23) s'étend du réservoir auxiliaire (19) au réservoir principal (18) au-dessus du réservoir de carburant (18, 19) et au-dessus du réservoir auxiliaire (19) .

5. Installation de réservoir (15) selon la revendication 3 ou 4, **caractérisée en ce que** le véhicule automobile (16) présente un cadre porteur comprenant au moins une traverse, en particulier un cadre conducteur, la conduite de liaison (23) s'étendant du réservoir auxiliaire (19) au réservoir principal (18) au-dessus ou au-dessous d'une des traverses.

6. Installation de réservoir (15) selon l'une quelconque des revendications précédentes, **caractérisée en ce qu'**en plus au moins l'un des composants suivants est intégré structurellement dans le détecteur de carburant (21) :
a) une conduite montante (6) qui fait saillie à l'état monté de haut en bas dans le réservoir de carburant (19) pour prélever le carburant hors du réservoir de carburant (19),
b) un capteur de niveau (22) qui mesure le niveau du carburant dans le réservoir de carburant (19),
c) une électronique d'évaluation qui est reliée en entrée au capteur de niveau et délivre en sortie un signal de sortie qui représente le niveau du carburant dans réservoir de carburant (19),
d) une soupape de ventilation pour désaérer ou ventiler le réservoir de carburant (19).

7. Installation de réservoir (15) selon la revendication 6, **caractérisée en ce que** la conduite montante (6), les raccords enfichables et la pompe à jet aspirant (7) sont composés de matière plastique.

8. Installation de réservoir (15) selon l'une quelconque des revendications précédentes, **caractérisée en ce que** le refoulement de carburant hors du réservoir auxiliaire (19) est effectué exclusivement par la pompe à jet aspirant (7) sans pompe à carburant à moteur supplémentaire.

9. Installation de réservoir (15) selon l'une quelconque des revendications précédentes, **caractérisée en ce que** la pompe à jet aspirant (7) présente une partie d'ajutage (11), l'entrée de pompe (8) étant reliée à la partie d'ajutage (11) par un collecteur à angle droit (13) et un collecteur en forme de U (14) consécutif.

10. Installation de réservoir (15) selon l'une quelconque des revendications précédentes, **caractérisée en ce que** l'entrée de fluide moteur (10) est reliée à la partie d'ajutage (11) par un collecteur à angle droit (12).

11. Véhicule automobile (16), en particulier véhicule utilitaire, en particulier camion ou bus, comprenant une installation de réservoir (15) selon l'une quelconque des revendications précédentes.
